# EUROPEAN PATENT APPLICATION

(11) **EP 4 815 108 A1**
(43) Date of publication of application: **30.09.2026**
(21) Application number: 24928023.1
(22) Date of filing: 19.08.2024
(51) Int. Cl.: H01M 10/613

(54) **BATTERY AND ELECTRIC DEVICE**

(30) Priority: 05.03.2024 CN 202420422802 U
(71) Applicant: Contemporary Amperex Technology Co., Limited, Ningde, Fujian 352100 (CN)
(72) Inventor: ZHOU, Cong, Ningde, Fujian 352100 (CN); HOU, Yuepan, Ningde, Fujian 352100 (CN); HUANG, Xiaoteng, Ningde, Fujian 352100 (CN)
(74) Representative: Lorenz Seidler Gossel Part. mbB
(86) International application number: PCT/CN2024/113171
(87) International publication number: WO 2025/185092

(57) **Abstract**

The present application relates to the technical field of batteries, and provides a battery and an electric device. The battery comprises a plurality of battery cells and liquid cooling structures; the battery cells are arranged at intervals; each liquid cooling structure comprises a liquid cooling main body part and a gel blocking strip connected to the liquid cooling main body part; the liquid cooling main body part is located between two adjacent battery cells; and the liquid cooling main body part, the two adjacent battery cells and the gel blocking strip define a gap for gel filling. According to the battery provided in the present application, the gel blocking strip is arranged on the liquid cooling main body part of each liquid cooling structure, so that the gel blocking strip can be connected to the liquid cooling main body part in advance; in this way, during the assembly of the liquid cooling structure and the battery cells, the working procedure of additionally mounting the gel blocking strip can be omitted, thereby improving the battery production and manufacturing efficiency to a certain extent.

## Description

The present application claims priority to Chinese Patent Application No. 202420422802.0, filed with the China National Intellectual Property Administration on March 5, 2024, entitled "BATTERY AND ELECTRICAL DEVICE", the entire contents of which are incorporated herein by reference.

### TECHNICAL FIELD

The present application relates to the technical field of batteries, and particularly provides a battery and an electrical device.

### BACKGROUND

A battery typically includes a plurality of battery cells and a liquid cooling mechanism located between two adjacent battery cells. Generally, a liquid cooling mechanism is made of metal with a high coefficient of heat conductivity. When the battery cells are cooled over a large area, in order to solve a problem that the liquid cooling mechanism dissipates heat too quickly due to direct contact between the edge of the liquid cooling mechanism and a battery box, an additional working procedure is required, i.e., additionally providing a rubber blocking strip between two adjacent battery cells and filling the space formed by the edge of the liquid cooling mechanism, the inner walls of the two adjacent battery cells, and the rubber blocking strip with rubber to prevent the liquid cooling mechanism from dissipating heat too quickly.

However, the addition of the working procedure also affects the batter production and manufacturing efficiency.

### TECHNICAL PROBLEM

An objective of the present application is to provide a battery and an electrical device, which are intended to improve the efficiency in a battery production and manufacturing process.

### TECHNICAL SOLUTION

To achieve the aforementioned objective, the following technical solutions are adopted in the present application.

In a first aspect, an embodiment of the present application provides a battery, including:
a plurality of battery cells, the battery cells being arranged at intervals; and
a liquid cooling structure, the liquid cooling structure including a main liquid cooling body and a rubber blocking strip connected to the main liquid cooling body, the main liquid cooling body being located between two adjacent battery cells, and the main liquid cooling body, the two adjacent battery cells, and the rubber blocking strip forming, through enclosing, a gap for rubber filling.

The beneficial effects of the embodiments of the present application are as follows: according to the battery provided in the present application, the rubber blocking strip is arranged on the main liquid cooling body of the liquid cooling structure, so that the rubber blocking strip can be connected to the main liquid cooling body in advance. Thus, when the liquid cooling structure and the battery cells are assembled, a working procedure of additionally mounting the rubber blocking strip can be omitted, thereby improving the battery production and manufacturing efficiency to a certain extent.

In some embodiments, the rubber blocking strip includes a support portion connected at one end to the main liquid cooling body and a blocking portion connected to one end of the support portion far from the main liquid cooling body; and the main liquid cooling body, the two adjacent battery cells, and the blocking portion form, through enclosing, the gap for rubber filling.

By adopting the above technical solution, the rubber blocking strip is divided into the support portion connected to the main liquid cooling body and the blocking portion used to achieve rubber blocking, and the two may be connected integrally or detachably. Thus, the main liquid cooling body, the two adjacent battery cells, and the blocking portion form, through enclosing, the gap for rubber filling.

In some embodiments, one end of the support portion far from the blocking portion is integrally formed on the main liquid cooling body.

By adopting the above technical solution, the support portion is integrally formed on the main liquid cooling body, and the working procedure of mounting the rubber blocking strip is further omitted. In a battery assembly process, the liquid cooling structure can be directly assembled with the battery cells, and the corresponding gap can be filled with rubber.

In some embodiments, the support portion is elastic, the battery cells have bottom walls, and a surface of the blocking portion facing away from the support portion can be flush with the bottom walls.

By adopting the above technical solution, the support portion may be pulled by increasing the filling amount of rubber, so that the surface of the blocking portion facing away from the support portion abuts against an inner wall of a battery box, i.e., the surface of the blocking portion facing away from the support portion can be flush with the bottom walls. Thus, the blocking portion is under an abutment effect of a solid structure, thereby reducing rubber overflow.

In some embodiments, the battery cells have bottom walls, and the blocking portion abuts against the bottom walls.

By adopting the above technical solution, the weight of the battery cells is used to apply pressure to the blocking portion, thereby improving the airtightness at the gap and further reducing the probability of rubber overflow.

In some embodiments, the two adjacent battery cells have two side walls facing each other, and two opposite ends of the blocking portion abut against the corresponding side walls respectively.

By adopting the above technical solution, the blocking portion and the side walls of the two adjacent battery cells are in an interference fit position relationship, so that the gap is filled with rubber and the risk of rubber overflow is reduced.

In some embodiments, the rubber blocking strip further includes a fin portion, at least one end of the blocking portion is provided with the fin portion, and the fin portion is used to increase a contact area between the blocking portion and the side wall.

By adopting the above technical solution, the fin portion is arranged at the end of the blocking portion to increase the contact area between the blocking portion and the side walls of the battery cells, thereby further reducing the risk of rubber overflow.

In some embodiments, the blocking portion is elastic.

By adopting the above technical solution, the fitting accuracy of distances between the blocking portion and the side walls of the two adjacent battery cells may be reduced, thereby ensuring that the opposite two ends of the blocking portion abut against the side walls.

In some embodiments, the blocking portion and the support portion are separately arranged, and the blocking portion is detachably connected to the end of the support portion far from the main liquid cooling body.

By adopting the above technical solution, the blocking portion and the support portion are detachably connected, and the size of the blocking portion may be adjusted according to the actual size and specification of the battery cells to meet the requirement for blocking rubber.

In a second aspect, an embodiment of the present application further provides an electrical device, including the aforementioned battery.

It can be understood that relevant descriptions in the first aspect may be referred to for the beneficial effects of the second aspect, and descriptions thereof are omitted here.

### DESCRIPTION OF DRAWINGS

To describe the technical solutions in the embodiments of the present application more clearly, the following will briefly describe the accompanying drawings required for describing the embodiments or the prior art. It is apparent that the accompanying drawings in the following description show merely some embodiments of the present application, and for a person of ordinary skill in the art, other drawings may be derived based on these accompanying drawings without creative efforts.
FIG. 1 is a schematic structural diagram of an electrical device provided in an embodiment of this application;
FIG. 2 is a schematic structural diagram of a battery provided in an embodiment of this application;
FIG. 3 is a partial schematic structural diagram of a battery provided in an embodiment of this application;
FIG. 4 is a schematic structural diagram of a liquid cooling structure provided in an embodiment of this application;
FIG. 5 is a cross-sectional view of a liquid cooling structure provided in an embodiment of this application;
FIG. 6 is an enlarged view at A in FIG. 5;
FIG. 7 is a left view of a battery provided in Embodiment 1 of the present application;
FIG. 8 is an enlarged view at B in FIG. 7;
FIG. 9 is a left view of a battery provided in Embodiment 2 of the present application;
FIG. 10 is an enlarged view at C in FIG. 9.

Reference numerals in the drawings:
10000. Electrical device; 1000. Controller; 2000: Motor;
3000. Battery; 3001. Battery box; 30011. First portion; 30012. Second portion;
100. Battery cell; 200. Liquid cooling structure; 100a. Gap; 100b. Bottom wall; 100c. Side wall;
201. Main liquid cooling body;
202. Rubber blocking strip; 2021. Support portion; 2022. Blocking portion; and 2023. Fin portion.

### DETAILED DESCRIPTION

The embodiments of the present application are described in detail below, and examples of the embodiments are shown in the accompanying drawings, in which the same or similar reference numerals throughout denote the same or similar elements or elements having the same or similar functions. The embodiments described below with reference to the accompanying drawings are exemplary and are intended to explain the present application, but should not be construed as limiting the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting the present application.

In addition, the terms "first" and "second" are used for descriptive purposes only, and cannot be construed as indicating or implying relative importance or implicitly indicating the number of technical features indicated. From this, features defined as "first" and "second" may explicitly or implicitly include one or more features. In the description of the present application, "plurality" means two or more, unless otherwise expressly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For a person of ordinary skill in the art, the specific meanings of the above terms in the present application may be understood on a case-by-case basis.

A battery typically includes a plurality of battery cells arranged together. To improve the performance of each battery cell during use, a liquid cooling plate is typically arranged between two adjacent battery cells to cool the battery cells, especially battery cells located in the middle.

Here, the liquid cooling plate is mostly made of metal. To solve a problem that the liquid cooling plate dissipates heat too quickly due to contact between the liquid cooling plate and a battery box, a space between an outer edge of the liquid cooling plate and an inner wall of the battery box needs to be filled with rubber. Moreover, to fix the rubber, a working procedure needs to be added to an assembly working procedure of batteries, i.e., providing a rubber blocking structure between two adjacent battery cells to reduce the probability of rubber overflow.

However, the addition of the working procedure also reduces the battery assembly efficiency, and the battery production efficiency is also lower.

In view of the above, the present application provides a battery, in which a rubber blocking strip is arranged on a main liquid cooling body of a liquid cooling structure. Then, when the liquid cooling structure is mounted between two adjacent battery cells, the rubber blocking strip is also located between the two battery cells. Therefore, a working procedure of providing the rubber blocking strip between two adjacent battery cells may be omitted, thereby simplifying a battery assembly process to a certain extent, reducing the number of working procedures, and improving the battery production efficiency.

An embodiment of the present application provides a battery 3000, which may be applied as a power supply to an electrical device 10000, e.g., a vehicle, a mobile phone, a portable device, a laptop, a ship, a spacecraft, and an electric tool. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, or the like. The electric toy includes a fixed or mobile electric toy, e.g., a game console, an electric car toy, an electric ship toy, and an electric airplane toy. The electric tool includes an electric metal cutting tool, an electric grinding tool, an electric assembly tool, or an electric railway tool, e.g., an electric drill, an electric grinder, an electric wrench, an electric screwdriver, an electric hammer, an electric impact drill, a concrete vibrator, and an electric planer.

The battery 3000 described in the embodiments of the present application is not limited to application to the electrical device 10000 described above, but may also be applied to all apparatuses using the battery 3000. However, for the sake of simplicity, the following embodiments are illustrated using an electric vehicle as an example.

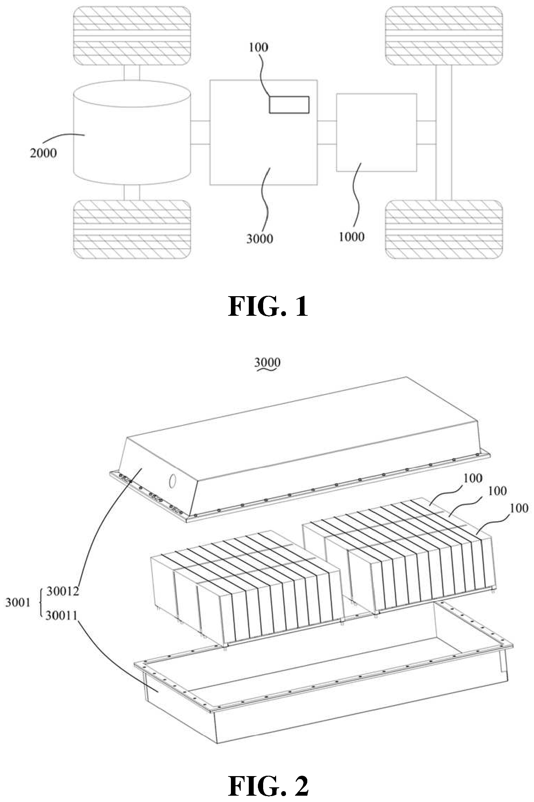

For example, FIG. 1 is a schematic structural diagram of a vehicle according to an embodiment of the present application. The vehicle may be a fuel vehicle, a gas vehicle, or a new energy vehicle. The new energy vehicle may be an all-electric vehicle, a hybrid electric vehicle, an extended-range electric vehicle, or the like. A battery 3000, a controller 1000, and a motor 2000 may be arranged in the vehicle. The controller 1000 is configured to control the battery 3000 to supply power to the motor 2000. For example, the battery 3000 may be arranged at the bottom or head or tail of the vehicle. The battery 3000 may be configured to supply power to the vehicle. For example, the battery 3000 may serve as an operating power source of the vehicle for a circuit system of the vehicle, e.g., for starting, navigation, and operation of the vehicle. In another embodiment of the present application, the battery 3000 not only may serve as the operating power source of the vehicle, but also may serve as a driving power source of the vehicle, to replace or partially replace fuel or natural gas to provide driving power for the vehicle.

The battery 3000 mentioned in the embodiments of the present application refers to a single physical module including one or more battery cells 100 to provide a higher voltage and capacity. Referring to FIG. 2, the battery 3000 may include a plurality of battery cells 100. The number of the battery cells 100 and the connection between the battery cells 100 may be configured according to requirements to meet different power needs. Specifically, the plurality of battery cells 100 may be in series, parallel, or parallel-series connection, and the parallel-series connection refers to a combination of series and parallel connections, so that the battery 3000 has a higher capacity or power. Optionally, the plurality of battery cells 100 may be in series, parallel, or parallel-series connection to form battery modules first, and then a plurality of battery modules are in series, parallel, or parallel-series connection to form the battery 3000. In other words, a plurality of battery cells may directly form the battery 3000, or may form battery modules first, and then the battery modules form the battery 3000.

The battery cell 100 includes an electrode assembly and an electrolytic solution, and the electrode assembly includes a positive electrode plate, a negative electrode plate, and a separator. The battery cell 100 operates mainly relying on movement of metal ions between the positive electrode plate and the negative electrode plate. The positive electrode plate includes a positive electrode current collector and a positive electrode active material layer. The surface of the positive electrode current collector is coated with the positive electrode active material layer. A current collector not coated with the positive electrode active material layer protrudes from the current collector coated with the positive electrode active material layer. The current collector not coated with the positive electrode active material layer is stacked to serve as a positive tab. For ease of description, positive and/or negative tabs are referred to as "tabs" below.

In the present application, the battery cell 100 includes, but is not limited to, a secondary lithium-ion battery cell, a primary lithium-ion battery cell, a lithium-sulfur battery cell, a sodium lithium-ion battery cell, a sodium-ion battery cell, a magnesium-ion battery cell, or the like. The battery cell may be in a cylinder shape, a flat body shape, a cuboid shape, or any other shape. Depending on the way of encapsulation, the battery cell 100 is typically of any one of three types: cylindrical battery cells, rectangular battery cells, and pouch battery cells.

The battery 3000 further includes a battery box 3001, the battery box 3001 has a containing space inside, and the plurality of battery cells are contained in the containing space. As shown in FIG. 2, the battery box 3001 may include two portions, which are referred to as a first portion 30011 and a second portion 30012 respectively. The first portion 30011 and the second portion 30012 may be connected by fastening, bonding, or the like to form the containing space. The plurality of battery cells are connected in parallel, series, or parallel-series, and then placed in a box formed by connecting the first portion 30011 with the second portion 30012. The shapes of the first portion 30011 and the second portion 30012 may be determined based on the shape of a combination of the plurality of battery cells.

The battery box 3001 is used to protect at least one battery cell 100, thereby reducing the impact of a liquid or other foreign matter outside the battery 3000 on charging or discharging of the at least one battery cell 100.

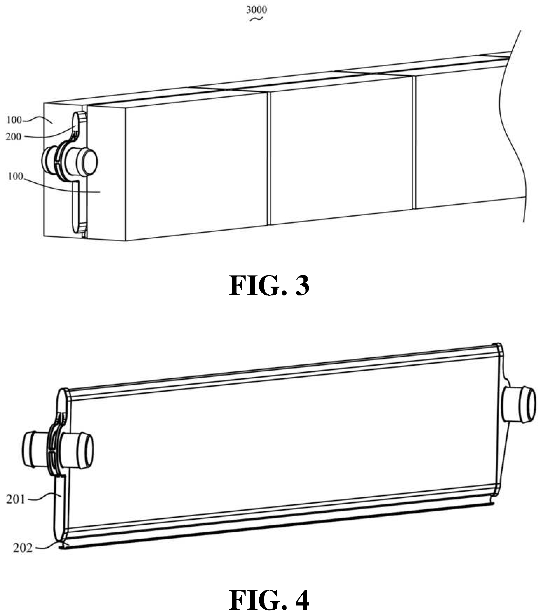

Referring to FIG. 3 to FIG. 6 and FIG. 8, FIG. 3 is a partial schematic structural diagram of a battery provided in an embodiment of the present application, and FIG. 4 is a schematic structural diagram of a liquid cooling structure provided in an embodiment of the present application. An embodiment of the present application provides a battery 3000, including a plurality of battery cells 100 and a liquid cooling structure 200.

The battery cells 100 are arranged at intervals.

The liquid cooling structure 200 includes a main liquid cooling body 201 and a rubber blocking strip 202 connected to the main liquid cooling body 201. The main liquid cooling body 201 is located between two adjacent battery cells 100, and the main liquid cooling body 201, the two adjacent battery cells 100, and the rubber blocking strip 202 form, through enclosing, a gap for rubber filling.

It can be understood that the battery cells 100 generate heat during operation. The battery cells 100 arranged at intervals are beneficial for arrangement of the liquid cooling structure 200 and may also increase a heat exchange area of the battery cells 100.

Exemplarily, for a plurality of rectangular battery cells 100, the rectangular battery cells 100 are arranged at intervals along a width direction of the battery cells. Thus, when exchanging heat with the liquid cooling structure 200, the maximum outer surface of the rectangular battery cells 100 may come into contact with the liquid cooling structure 200, thereby greatly improving the heat exchange efficiency.

The main liquid cooling body 201 of the liquid cooling structure 200 may be a water cooling plate or a mixed liquid-solid cooling plate. A harmonica tube structure may be referred to for the specific structure of the main liquid cooling body 201.

The rubber blocking strip 202 is arranged between two adjacent battery cells 100 to correspondingly block rubber that fills the gap 100a, to reduce the risk of rubber overflow.

Here, the rubber blocking strip 202 is connected to the main liquid cooling body 201, i.e., the two are connected during battery assembly. The rubber blocking strip 202 and the main liquid cooling body 201 may be connected integrally or detachably.

The rubber blocking strip 202 may be made of rubber, the main liquid cooling body 201 may be made of metal, and the two may be integrally formed and connected by in-mold injection molding. Thus, during battery assembly, after the main liquid cooling body 201 is arranged, the rubber blocking strip 202 is also correspondingly arranged, thereby omitting a working procedure of arranging the rubber blocking strip 202. The gap 100a formed is directly filled with rubber, thereby shortening the battery assembly time and improving the battery production efficiency.

Or, the rubber blocking strip 202 may be connected to the main liquid cooling body 201 by insertion, snap-fit, or bonding, which also meets the requirement for omitting the working procedure by arranging the rubber blocking strip 202 in advance. In other words, the assembled incoming liquid cooling structure 200 is also provided with the rubber blocking strip 202, and the gap 100a formed may be directly filled with rubber, thereby shortening the battery assembly time and improving the battery production efficiency.

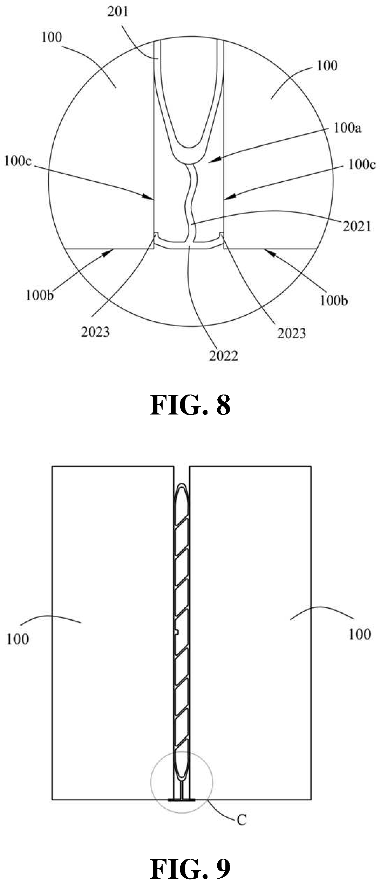

Exemplarily, as shown in FIG. 8, the main liquid cooling body 201 has side surfaces in contact with the battery cells 100 and end faces that connect the two adjacent side surfaces. The rubber blocking strip 202 is arranged on an end face of the main liquid cooling body 201. When the side surfaces of the main liquid cooling body 201 are in contact with the two adjacent battery cells 100, the end face of the main liquid cooling body 201 faces the battery box. Thus, the end face of the main liquid cooling body 201, the outer walls of the two adjacent battery cells 100, and the rubber blocking strip 202 form the gap 100a for rubber filling.

According to the battery provided in the present application, the rubber blocking strip 202 is arranged on the main liquid cooling body 201 of the liquid cooling structure 200, so that the rubber blocking strip 202 can be connected to the main liquid cooling body 201 in advance. Thus, when the liquid cooling structure 200 and the battery cells 100 are assembled, a working procedure of additionally mounting the rubber blocking strip 202 can be omitted, thereby improving the battery production and manufacturing efficiency to a certain extent.

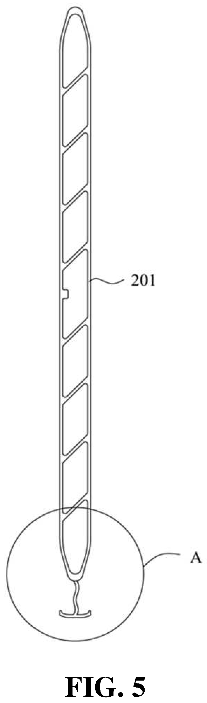

Referring to FIG. 5, FIG. 6, and FIG. 8, in some embodiments, the rubber blocking strip 202 includes a support portion 2021 connected at one end to the main liquid cooling body 201 and a blocking portion 2022 connected to one end of the support portion 2021 far from the main liquid cooling body 201; and the main liquid cooling body 201, the two adjacent battery cells 100, and the blocking portion 2022 form the gap 100a for rubber filling.

It can be understood that the support portion 2021 has a corresponding function of connecting the main liquid cooling body 201 with the blocking portion 2022. Here, the support portion 2021 may be made of the same material as the main liquid cooling body 201, to meet the requirement of integral forming on the main liquid cooling body 201. Or, the support portion 2021 may also be made of rubber or resin, which can also meet the requirement of integral forming on the main liquid cooling body 201. Or, the support portion 2021 may also meet the requirement of detachable connection with the main liquid cooling body 201. Specifically, the support portion 2021 may be a plate-like, sheet-like, or strip-like structure, and the plane on which the support portion 2021 is located is parallel or approximately parallel to the outer surfaces of the battery cells 100.

The blocking portion 2022 is used to block rubber and forms the gap 100a with the main liquid cooling body 201 and the two adjacent battery cells 100. Since the blocking portion 2022 is in direct contact with the battery cells 100, to reduce damage to the battery cells 100, the blocking portion 2022 is typically made of an elastic material. For example, the blocking portion 2022 may be made of rubber, resin, plastic, or the like, to meet the requirement of flexible connection with the battery cells 100. Therefore, the support portion 2021 may be made of the same material as the blocking portion 2022, or be made of a different material from the blocking portion 2022. Specifically, the blocking portion 2022 may be a plate-like, block-like, or sheet-like structure, and the plane on which the blocking portion 2022 is located is vertical or approximately vertical to the outer surfaces of the battery cells 100. Thus, the cross-sectional shape of the rubber blocking strip 202 is similar to a "T" shape.

Exemplarily, the support portion 2021 is made of the same material, i.e., rubber, as the blocking portion 2022, then the support portion 2021 and the blocking portion 2022 may be integrally formed by injection molding. Therefore, both the support portion 2021 and the blocking portion 2022 have a certain degree of elasticity to meet the requirement that the blocking portion 2022 abuts against the two adjacent battery cells 100.

In summary, the rubber blocking strip 202 is divided into the support portion 2021 connected to the main liquid cooling body 201 and the blocking portion 2022 used to achieve rubber blocking, and the two may be connected integrally or detachably. Thus, the main liquid cooling body 201, the two adjacent battery cells 100, and the blocking portion 2022 form the gap 100a for rubber filling.

In some embodiments, one end of the support portion 2021 far from the blocking portion 2022 is integrally formed on the main liquid cooling body 201.

It can be understood that, the support portion 2021 may be made of the same material as the main liquid cooling body 201. For example, both the support portion 2021 and the main liquid cooling body 201 are made of aluminum alloy, magnesium alloy, aluminum-magnesium alloy, or the like. Therefore, the support portion 2021 may be integrally formed on the main liquid cooling body 201 by integral casting or stamping.

Or, the support portion 2021 may be made of a different material from the main liquid cooling body 201. For example, the support portion 2021 is made of rubber, resin, plastic, or the like, while the main liquid cooling body 201 is made of metal alloy. In this case, the support portion 2021 and the main liquid cooling body 201 may be integrally formed by in-mold injection molding.

The blocking portion 2022 may be made of the same material as or a different material from of the support portion 2021, which is selected according to a specific application scenario.

In summary, the support portion 2021 is integrally formed on the main liquid cooling body 201, and the working procedure of mounting the rubber blocking strip 202 is further omitted. In a battery assembly process, the incoming liquid cooling structure 200 already includes the rubber blocking strip 202, the liquid cooling structure 200 can be directly assembled with the battery cells 100, and the gap 100a formed by assembly can be directly filled with rubber.

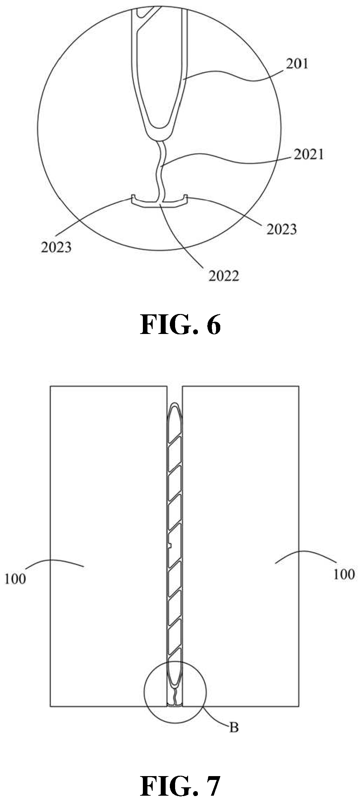

Referring to FIG. 7 and FIG. 8, in some embodiments, the support portion 2021 is elastic, the battery cells 100 have bottom walls 100b, and a surface of the blocking portion 2022 facing away from the support portion 2021 can be flush with the bottom walls 100b.

In can be understood that, the support portion 2021 is elastic. Therefore, the support portion 2021 is made of a flexible material such as rubber, resin, or plastic. When the filling amount of rubber in the gap 100a is large, the support portion 2021 may support the blocking portion 2022 to gradually move away from the main liquid cooling body 201 until locking portion 2022 abuts against an inner wall of the battery box.

The blocking portion 2022 is located within the space formed by the two adjacent battery cells 100 and does not extend beyond the bottom walls 100b of the battery cells 100. Therefore, when the filling amount of rubber in the gap 100a is large, a surface of the blocking portion 2022 facing away from the support portion 2021 is in contact with an inner wall of the battery box, and can be flush with the bottom walls 100b of the battery cells 100.

Here, the bottom walls 100b of the battery cells 100 refer to the walls of the battery cells 100 that are in contact with the inner wall of the box when the battery cells 100 are placed inside the box.

In summary, when the support portion 2021 is pulled by increasing the filling amount of rubber, the surface of the blocking portion 2022 facing away from the support portion 2021 after being subjected to heavy pressure abuts against the inner wall of the battery box, i.e., the surface of the blocking portion 2022 facing away from the support portion 2021 can be flush with the bottom walls 100b. Thus, the blocking portion 2022 is under an abutment effect of a solid structure, thereby reducing rubber overflow.

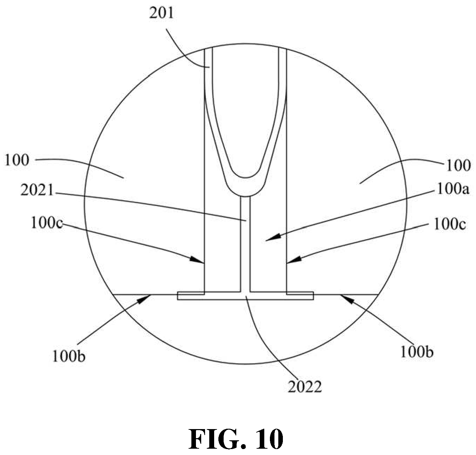

Referring to FIG. 9 and FIG. 10, in some embodiments, the battery cells 100 have bottom walls 100b, and the blocking portion 2022 abuts against the bottom walls 100b.

It can be understood that the blocking portion 2022 is located outside a space formed by the two adjacent battery cells 100. During battery assembly, the bottom walls 100b of the battery cells 100 abut against the blocking portion 2022. This can be understood as the blocking portion 2022 being at least partially located between the bottom walls 100b of the battery cells 100 and the inner wall of the box, i.e., the weight of the battery cells 100 provide sealing pressure at the connection between the blocking portion 2022 and the bottom walls 100b.

Here, the bottom walls 100b of the battery cells 100 refer to the walls of the battery cells 100 that are in contact with the inner wall of the box when the battery cells 100 are placed inside the box.

In summary, the weight of the battery cells 100 is used to apply pressure to the blocking portion 2022, thereby improving the airtightness at the gap 100a and further reducing the probability of rubber overflow.

Referring to FIG. 8, in some embodiments, the two adjacent battery cells 100 have two side walls 100c facing each other, and two opposite ends of the blocking portion 2022 abut against the corresponding side walls 100c respectively.

It can be understood that the side walls 100c of the battery cells 100 refer to the walls of the battery cells 100 corresponding to the adjacent battery cells 100 after the battery cells 100 are placed, and the walls of the battery cells 100 are also the walls that are in contact with the main liquid cooling body 201.

The blocking portion 2022 may be a plate-like, block-like, or sheet-like structure. Therefore, the blocking portion 2022 has two oppositely arranged ends, and interference fit is used between the two oppositely arranged ends of the blocking portion 2022 and the corresponding side walls 100c.

In summary, the blocking portion 2022 and the side walls 100c of the two adjacent battery cells 100 are in an interference fit position relationship, so that the gap 100a is filled with rubber and the risk of rubber overflow is reduced.

Referring to FIG. 8, in some embodiments, the rubber blocking strip 202 further includes a fin portion 2023, at least one end of the blocking portion 2022 is provided with the fin portion 2023, and the fin portion 2023 is used to increase a contact area between the blocking portion 2022 and the side wall 100c.

It can be understood that the fin portion 2023 may be a sheet-like structure with a large surface area. The fin portion 2023 may be connected to the side walls 100c by attaching or bonding. Therefore, the fin portion 2023 can increase the contact area between the blocking portion 2022 and the side walls 100c.

Optionally, to improve the sealing and leak-proof performance at the gap 100a, fin portions 2023 are arranged at both ends of the blocking portion 2022. Therefore, by taking advantage of the larger contact area between the fin portions 2023 and the side walls 100c, the risk of rubber overflow is reduced.

Here, the fin portions 2023 may be made of the same material, for example, rubber, resin, or plastic, as the blocking portion 2022.

In summary, the fin portions 2023 are arranged at the ends of the blocking portion 2022 to increase the contact area between the blocking portion 2022 and the side walls 100c of the battery cells 100, thereby further reducing the risk of rubber overflow.

In some embodiments, the blocking portion 2022 is elastic.

It can be understood that the blocking portion 2022 may be made of a flexible material so that the blocking portion 2022 is elastic. For example, the blocking portion 2022 may be made of rubber, resin, plastic, or the like. Or, the blocking portion 2022 may be made of lightweight metal, such as an aluminum sheet or an aluminum-magnesium sheet.

Thus, when interference fit is used between the blocking portion 2022 and the side walls 100c of the two adjacent battery cells 100, the elastic blocking portion 2022 may reduce the fitting accuracy of distances between the blocking portion 2022 and the side walls 100c of the two adjacent battery cells 100, and especially may solve a problem of unequal distances between side walls 100c of two adjacent battery cells 100 caused by the thickness difference of the liquid cooling may body 201. Thus, it is ensured that the opposite two ends of the blocking portion 2022 abut against the side walls 100c.

In some embodiments, the blocking portion 2022 and the support portion 2021 are separately arranged, and the blocking portion 2022 is detachably connected to the end of the support portion 2021 far from the main liquid cooling body 201.

It can be understood that the blocking portion 2022 and the support portion 2021 are two independently arranged components, which can be connected in a corresponding manner when needed.

Exemplarily, a snap-fit protrusion is formed at one end of the support portion 2021 far from the main liquid cooling body 201, and a snap-fit recess adapted to the snap-fit protrusion is formed in the blocking portion 2022, i.e., the support portion 2021 and the blocking portion 2022 are detachably connected by snap-fit connection.

Exemplarily, an insertion portion is formed at one end of the support portion 2021 far from the main liquid cooling body 201, and an insertion hole adapted to the insertion portion is formed in the blocking portion 2022, i.e., the support portion 2021 and the blocking portion 2022 are detachably connected by insertion connection.

Thus, the size of the blocking portion 2022 on the support portion 2021 may be adjusted according to the actual size and specification of the battery cells 100 to meet the requirement for blocking rubber.

Referring to FIG. 3 to FIG. 8, in a specific embodiment, the embodiment of the present application provides a battery 3000, including a plurality of battery cells 100 and a liquid cooling structure 200.

The battery cells 100 are arranged at intervals. The liquid cooling structure 200 includes a main liquid cooling body 201 and a rubber blocking strip 202 connected to the main liquid cooling body 201. The main liquid cooling body 201 is located between two adjacent battery cells 100. The rubber blocking strip 202 includes a support portion 2021 connected at one end to the main liquid cooling body 201 and a blocking portion 2022 connected to one end of the support portion 2021 far from the main liquid cooling body 201. The main liquid cooling body 201, the two adjacent battery cells 100, and the blocking portion 2022 form the gap 100a for rubber filling.

The support portion 2021 is elastic, the battery cells 100 have bottom walls 100b, and a surface of the blocking portion 2022 facing away from the support portion 2021 can be flush with the bottom walls 100b.

The two adjacent battery cells 100 have two side walls 100c facing each other, and two opposite ends of the blocking portion 2022 abut against the corresponding side walls 100c respectively.

The rubber blocking strip 202 further includes a fin portion 2023, at least one end of the blocking portion 2022 is provided with the fin portion 2023, and the fin portion 2023 is used to increase a contact area between the blocking portion 2022 and the side wall 100c.

One end of the support portion 2021 far from the blocking portion 2022 is integrally formed on the main liquid cooling body 201. Moreover, the support portion 2021 and the blocking portion 2022 are also integrally formed.

In a second aspect, an embodiment of the present application further provides an electrical device 10000, including the aforementioned battery 3000.

In an example in which the electrical device is an electric vehicle, a battery 3000, a controller 1000, and a motor 2000 are arranged in the vehicle. The controller 1000 is configured to control the battery 3000 to supply power to the motor 2000. For example, the battery 3000 may be arranged at the bottom or head or tail of the vehicle. The battery 3000 may be configured to supply power to the vehicle. For example, the battery 3000 may serve as an operating power source of the vehicle for a circuit system of the vehicle, e.g., for starting, navigation, and operation of the vehicle. In another embodiment of the present application, the battery 3000 not only may serve as the operating power source of the vehicle, but also may serve as a driving power source of the vehicle, to replace or partially replace fuel or natural gas to provide driving power for the vehicle.

It can be understood that relevant descriptions in the first aspect may be referred to for the beneficial effects of the second aspect, and descriptions thereof are omitted here.

The above descriptions are merely exemplary embodiments of the present application, and are not intended to limit the present application. Any modification, equivalent replacement, and improvement made within the spirit and principle of the present application shall fall within the protection scope of the present application.

## Claims

1. A battery, comprising:
a plurality of battery cells, the battery cells being arranged at intervals; and
a liquid cooling structure, the liquid cooling structure comprising a main liquid cooling body and a rubber blocking strip connected to the main liquid cooling body, the main liquid cooling body being located between two adjacent battery cells, and the main liquid cooling body, the two adjacent battery cells, and the rubber blocking strip forming, through enclosing, a gap for rubber filling.

2. The battery according to claim 1, wherein the rubber blocking strip comprises a support portion connected at one end to the main liquid cooling body and a blocking portion connected to one end of the support portion far from the main liquid cooling body; and the main liquid cooling body, the two adjacent battery cells, and the blocking portion form, through enclosing, the gap for rubber filling.

3. The battery according to claim 2, wherein one end of the support portion far from the blocking portion is integrally formed on the main liquid cooling body.

4. The battery according to claim 3, wherein the support portion is elastic, the battery cells have bottom walls, and a surface of the blocking portion facing away from the support portion is flush with the bottom walls.

5. The battery according to claim 3, wherein the battery cells have bottom walls, and the blocking portion abuts against the bottom walls.

6. The battery according to claim 2, wherein the two adjacent battery cells have two side walls facing each other, and two opposite ends of the blocking portion abut against the corresponding side walls respectively.

7. The battery according to claim 6, wherein the rubber blocking strip further comprises a fin portion, at least one end of the blocking portion is provided with the fin portion, and the fin portion is used to increase a contact area between the blocking portion and the side wall.

8. The battery according to claim 7, wherein the blocking portion is elastic.

9. The battery according to claim 2, wherein the blocking portion and the support portion are separately arranged, and the blocking portion is detachably connected to the end of the support portion far from the main liquid cooling body.

10. An electrical device, comprising the battery according to any one of claims 1 to 9.
